# EUROPÄISCHE PATENTSCHRIFT

(11) **EP 2 070 737 B1**
(45) Veröffentlichungstag und Bekanntmachung des Hinweises auf die Patenterteilung: **10.11.2010**
(21) Anmeldenummer: 08017530.0
(22) Anmeldetag: 07.10.2008
(51) Int. Cl.: B60D 1/52, B60D 1/36

(54) **Anhängekupplung mit Einführhilfeeinrichtung**
Draw bar with insertion assistance device
Attelage doté d'un dispositif d'aide à l'introduction

(30) Priorität: 13.12.2007 DE 102007060529
(43) Veröffentlichungstag der Anmeldung: 17.06.2009
(73) Patentinhaber: WESTFALIA - Automotive GmbH, 33378 Rheda-Wiedenbrück (DE)
(72) Erfinder: Hahn, Jochen, 74223 Flein (DE); Benda, Thomas, Dr., 37574 Einbeck (DE); Hermbusch, Gerhard, 33449 Langenberg (DE); Wyrwich, Martin, 33378 Rheda-Wiedenbrück (DE); Stratmann, Gregor, 33142 Büren (DE); Sielhorst, Bernhard, 36205 Sontra (DE); Schmitt, Michael, 33829 Borgholzhausen (DE)
(74) Vertreter: Bregenzer, Michael

(56) Entgegenhaltungen:
- EP-A- 0 491 241
- DE-A1- 10 344 253
- DE-U1- 20 003 901
- GB-A- 2 363 262

## Beschreibung

Die Erfindung betrifft eine Anhängekupplung für Kraftfahrzeuge, insbesondere Personenkraftwagen, mit einem Kupplungsarm, der an seinem freien Ende ein Kopfstück zum lösbaren Befestigen eines Anhängers trägt und mit einem Kupplungsarm-Steckende an eine Steckaufnahme eines an dem Kraftfahrzeug anordenbaren Kupplungsarm-Halters insbesondere manuell ansteckbar ist.

Anhängekupplungen dieser Art sind allgemein bekannt, siehe zum Beispiel die DE-A-10344253. Der Kupplungsarm kann von dem fahrzeugseitig befestigten Kupplungsarm-Halter entfernt werden und beispielsweise im Gepäckabteil des Kraftfahrzeuges bei Nichtgebrauch verstaut werden. Dann steht er nicht mehr nach hinten vor das Kraftfahrzeug vor, was optisch ansprechend ist und zudem die Unfallgefahr verringert. Der Kupplungsarm-Halter ist in der Regel verdeckt im Heckbereich des Kraftfahrzeuges angeordnet, üblicherweise hinter einem Stoßfänger, so dass er bei Nichtgebrauch der Anhängekupplung nicht sichtbar ist.

Dies hat allerdings zur Folge, dass der Bediener zum Anbringen des Kupplungsarmes an dem Kupplungsarm-Halter von hinten unten an das Kraftfahrzeug herangehen muss, um eine Position der Einführöffnung der Steckaufnahme aufzufinden, so dass er den Kupplungsarm in die Steckaufnahme einstecken kann. Insbesondere bei widrigen Umweltverhältnissen, bei Regen und dergleichen, ist diese Prozedur umständlich und unkomfortabel.

Es ist daher die Aufgabe der vorliegenden Erfindung, eine komfortabel handhabbare Anhängekupplung für Kraftfahrzeuge bereitzustellen.

Zur Lösung der Aufgabe ist bei einer Anhängekupplung der eingangs genannten Art vorgesehen, dass sie eine Einführhilfeeinrichtung zur Unterstützung eines Einführens des Kupplungsarm-Steckendes in oder auf die Steckaufnahme des Kupplungsarm-Halters aufweist, dass die Einführhilfeeinrichtung ein Indexteil umfasst, das in einer Einführhilfeposition vor die Steckaufnahme zur Anzeige der Position der Steckaufnahme, insbesondere von deren Einführöffnung, vorsteht, und dass die Einführhilfeeinrichtung ein Lager zum Verstellen des Indexteils zwischen der Einführhilfeposition und einer Nichtgebrauchsstellung aufweist.

In der Einführhilfeposition steht das Indexteil beispielsweise nach unten vor einen Stoßfänger des Kraftfahrzeuges vor, so dass die Steckaufnahme leicht auffindbar ist. Farbige Markierungen, Symbole und dergleichen sind bei dem Indexteil vorteilhaft, so dass es optisch leicht erkennbar ist. In der Nichtgebrauchsstellung kann das Indexteil jedoch von der Steckaufnahme wegbewegt werden oder die Steckaufnahme zumindest partiell verdecken, so dass es nicht oder zumindest im Wesentlichen nicht sichtbar ist, wenn die Anhängekupplung nicht gebraucht wird. Zum Beispiel hat das Indexteil eine solche Länge, dass es im am Fahrzeug montierten Zustand nach unten vor einen Stoßfänger vorsteht.

Die erfindungsgemäße Anhängekupplung ist bei einer manuellen Bedienung vorteilhaft. Ein Bediener kann den Kupplungsarm mittels der Einführhilfeeinrichtung leicht in die Steckaufnahme des Kupplungsarm-Halters einführen.

Der Kupplungsarm ist zweckmäßigerweisevon dem Kupplungsarm-Halter und/oder der Einführhilfeeinrichtung entfernbar.

Das Lager zur Bewegung des Indexteiles zwischen den beiden Positionen umfasst beispielsweise ein Schiebelager und/oder ein Schwenklager. Das Lager kann beispielsweise an einem am Kraftfahrzeug montierbaren oder montiertem Querträger oder einem sonstigem fahrzeugfest montierten Teil fest sein. Vorzugsweise ist das Lager jedoch an einem Kupplungsarm-Halter angeordnet.

Die Einführhilfeeinrichtung umfasst zweckmäßigerweise einen ringförmigen oder teilringförmigen Ringhalter, der den Kupplungsarm-Halter umgreift. Der Ringhalter kann beispielsweise rohrschellenartig sein. Es ist aber auch möglich, dass der Ringhalter gabelartig ausgestaltet ist, wobei er mehr als die Hälfte des Außenumfangs des Kupplungsarm-Halters vorteilhaft umgreifen sollte. Es versteht sich, dass der Ringhalter einteilig sein kann oder auch zweiteilig.

Der Ringhalter bildet zweckmäßigerweise einen Bestandteil des Lagers. Er ist vorzugsweise schiebebeweglich und/oder schwenkbeweglich bezüglich des Kupplungsarm-Halters. An dem Kupplungsarm-Halter ist vorteilhaft mindestens ein Anschlag vorgesehen, der die Schwenkbewegung und/oder Schiebebewegung des Ringhalters begrenzt, z.B. in der Einführhilfeposition.

Das Lager und das Indexteil sind vorteilhaft einstückig. Beispielsweise besteht das Lager und das Indexteil, zweckmäßigerweise sogar die gesamte Einführhilfeeinrichtung, aus einem einzigen Kunststoffteil. Bei diesem ist es besonders einfach ein Filmscharnier auszubilden, dass das Lager bilden kann.

Die Einführhilfeeinrichtung, z.B. das Lager, umfasst vorteilhaft eine Faltstruktur, die beispielsweise durch das vorgenannte Filmscharnier gebildet sein kann.

Zweckmäßigerweise umfasst die Anhängekupplung auch einen Dekkel zum Verschließen der Steckaufnahme. Der Deckel ist zumindest partiell in die Steckaufnahme einsteckbar und schützt diese vor Verschmutzung.

Der Deckel und/oder das Indexteil haben zweckmäßigerweise Haltemittel zum Halten des Deckels in der Steckaufnahme. Die Haltemittel umfassen beispielsweise Klemmmittel, z.B. Klemmvorsprünge, Rastmittel, z.B. Rastnasen oder dergleichen sowie gegebenenfalls auch Formschlussteile, die an einem Innenumfang der Steckaufnahme oder sonstige Formschlusskonturen am Kupplungsarm-Halter angepasst sind.

Der Deckel hat vorteilhaft einen Betätigungsabschnitt zum Betätigen des Indexteils in Richtung der Nichtgebrauchsstellung. Dies ist insbesondere vorteilhaft, wenn der Deckel ein von der sonstigen Anhängekupplung separates Bauteil bildet. Der Betätigungsabschnitt wird beispielsweise durch einen Betätigungsvorsprung gebildet. Vorteilhaft ist es auch, wenn der Betätigungsabschnitt das Indexteil in der Nichtgebrauchsstellung hält. Es ist aber auch möglich, dass das Indexteil in der Nichtgebrauchsstellung durch sonstige Haltemittel, z.B. eine Verrastung oder dergleichen zwischen dem Indexteil und einem fahrzeugfesten Bauteil, gehalten wird.

Der Deckel kann beispielsweise ein separates, von der Anhängekupplung vollständig entfernbares Bauteil sein. Vorteilhaft bildet der Deckel jedoch einen Bestandteil der Einführhilfeeinrichtung. Beispielsweise kann der Deckel an einem Indexteil angeordnet sein oder sogar durch das Indexteil gebildet werden. Man könnte auch formulieren, dass das Indexteil so zum Verschließen der Steckaufnahme des Kupplungsarm-Halters ausgestaltet ist.

Vorteilhaft hat die Einführhilfeeinrichtung mindestens einen Handgriff zum Verstellen des Indexteils zwischen der Einführhilfeposition und der Nichtgebrauchsstellung. Der mindestens eine Handgriff kann beispielsweise an dem Indexteil direkt angeordnet sein oder durch das Indexteil gebildet werden.

Vorteilhaft ist es aber auch, wenn der mindestens eine Handgriff an einem Handgriffteil angeordnet ist, das mit dem Indexteil bewegungsgekoppelt ist. Somit kann mit Hilfe des Handgriffteils das Indexteil zwischen der Einführhilfeposition und der Nichtgebrauchsstellung bewegt werden, beispielsweise schwenkbewegt und/oder schiebebewegt werden.

Der vorgenannte Deckel kann beispielsweise an dem Handgriffteil angeordnet sein. Das Handgriffteil kann zudem auch noch die Funktion eines Steckdosenträger haben, an dem eine Anhängersteckdose zur elektrischen Stromversorgung eines Anhängers angeordnet ist.

In diesem Zusammenhang sei betont, dass auch eine dreiteilige Bauweise möglich ist, bei der ein Indexteil, ein Steckdosenträger sowie ein Handgriffteil vorhanden sind, die zweckmäßigerweise wechselseitig bewegungsgekoppelt sind.

Wenn der Deckel an einem schwenkbeweglichen Deckelhalter-Bauteil der Anhängekupplung, angeordnet ist, beispielsweise an dem Indexteil, dem Steckdosenträger oder dem Handgriffteil, ist es vorteilhaft, wenn er eine sogenannte Pendellagerung aufweist. Bei dieser Pendellagerung ist die Schwenkachse bzw. Pendelachse des Deckels an einem jeweiligen Deckelhalter-Bauteil parallel zur Schwenkachse, mit der der Deckel zwischen einer die Steckaufnahme verschließenden Verschließstellung und einer die Steckaufnahme freigebenden Freigabestellung schwenkbeweglich ist.

Vorzugsweise ist das Indexteil mit einem Steckdosenträger für eine Anhängersteckdose bewegungsgekoppelt. Dieser Steckdosenträger kann z.B. das vorgenannte Handgriffteil sein oder auch ein separater, lediglich zum Tragen der Anhängersteckdose vorgesehenes Bauteil.

Zweckmäßigerweise bildet das Handgriffteil den Steckdosenträger. Man könnte auch formulieren, dass der Steckdosenträger das Handgriffteil bildet. Somit ist es möglich, das Indexteil, beispielsweise durch Betätigen des Steckdosenträgers, in die Einführhilfeposition oder die Nichtgebrauchsstellung zu bewegen.

Bevorzugt ist es, wenn das Indexteil, insbesondere wenn es ein den Deckel haltendes Deckelhalter-Bauteil bildet, und der Steckdosenträger derart bewegungsgekoppelt sind, dass der Steckdosenträger zwar mittels des Indexteils betätigbar ist, jedoch nicht umgekehrt, d.h. dass das Indexteil den Steckdosenträger gegen eine Betätigung blockiert. Wenn das Indexteil in der Einführhilfeposition ist, bei der in der Regel der Kupplungsarm in die Steckaufnahme eingesteckt ist, ist somit der Steckdosenträger gegen eine Schwenkbewegung verriegelt. Beispielsweise kann der in die Steckaufnahme gesteckte Kupplungsarm das Indexteil gegen eine Bewegung blockieren, das seinerseits wiederum den Steckdosenträger gegen eine unbeabsichtigte Schwenkbewegung blockiert.

Eine Bewegungskopplung zwischen Indexteil und Steckdosenträger und/oder zwischen Indexteil und Handgriffteil ist beispielsweise mittels einer Kulissenführung herstellbar. Aber auch Mitnahmevorsprünge oder dergleichen sind zur Bewegungskopplung ohne weiteres denkbar.

Die vorgenannte Blockierung des Steckdosenträgers durch das Indexteil oder ein sonstiges Deckelhalter-Bauteil ist mit der Führungskulisse z.B. dadurch herstellbar, dass an einer Führungskulisse jeweils Schwenkanschläge und/oder Linearanschläge vorgesehen sind, die ein Schwenken des Steckdosenträgers um seine Schwenkachse oder ein Verschieben verhindern.

Das Indexteil hat zweckmäßigerweise eine zumindest teilweise hohlzylindrische Gestalt, die mit dem zugeordneten Kupplungsarmbereich in der Nähe von dessen Kupplungsarm-Steckende korrespondiert.

Die Erfindung umfasst auch eine Einführhilfeeinrichtung als von den sonstigen Bestandteilen der Anhängekupplung, beispielsweise des Kupplungsarm-Halters, separate Einrichtung.

Nachfolgend werden Ausführungsbeispiele der Erfindung anhand der Zeichnung erläutert. Es zeigen:
- Figur 1: eine perspektivische Ansicht eines ersten Ausfüh- rungsbeispiels einer Einführhilfeeinrichtung mit einem Filmscharnier,
- Figur 2: die Einführhilfeeinrichtung gemäß Figur 1 in Sei- tenansicht,

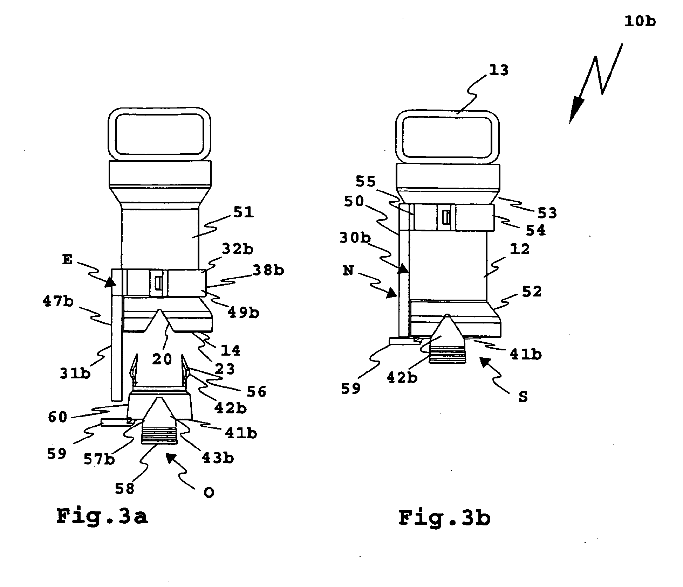

- Fig. 3a, 3b: Seitenansichten eines zweiten Ausführungsbei- spiels einer Einführhilfeeinrichtung in Einführhil- feposition sowie in Nichtgebrauchsstellung,

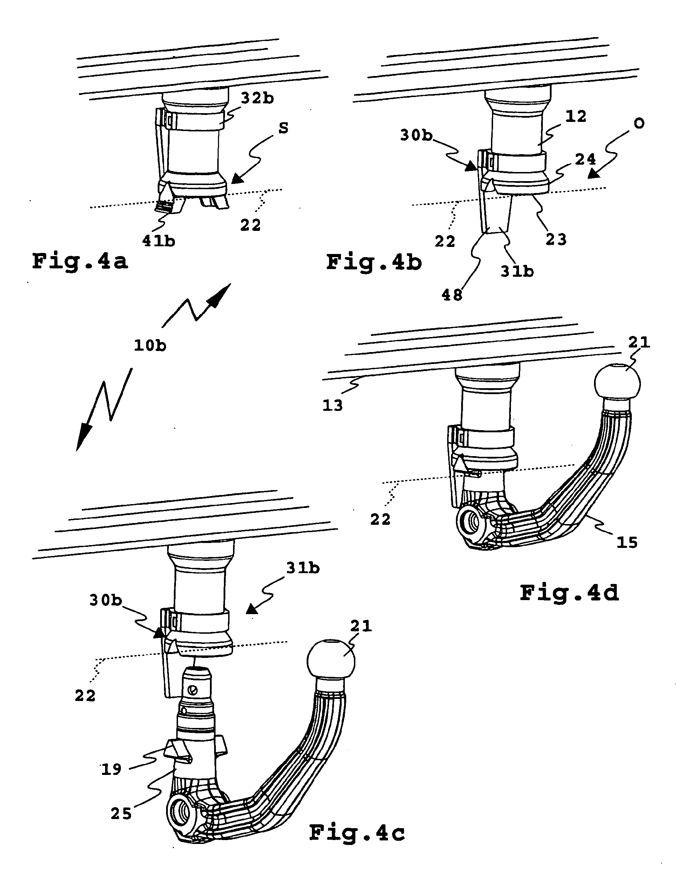

- Fig. 4a-4d: perspektivische Schrägansichten der Einführhilfe- einrichtung gemäß Figuren 3a, 3b zur Veranschauli- chung eines Montagevorgangs eines Kupplungsarms an einem Kupplungsarm-Halter,
- Figur 5a: ein drittes Ausführungsbeispiel einer Einführhilfe- einrichtung mit einem Steckdosenträger, an dem ein Deckel zum Verschließen einer Steckaufnahme eines Kupplungsarm-Halters angeordnet ist, sowie einem mit dem Steckdosenträger bewegungsgekoppelten In- dexteil in Nichtgebrauchsstellung,
- Fig. 5b-5d: einen Bewegungsablauf bei der Montage eines Kupp- lungsarmes an der Anhängekupplung gemäß Figur 5a und
- Figur 6a: ein viertes Ausführungsbeispiel einer erfindungsge- mäßen Einführhilfeeinrichtung mit einem Indexteil, an dem ein Deckel zum Verschließen einer Steckauf- nahme eines Kupplungsarm-Halters angeordnet ist so- wie einem Steckdosenträger von schräg hinten in Nichtgebrauchsstellung,
- Fig. 6b-6c: einen Bewegungsablauf beim Verstellen des Index- teils von der Nichtgebrauchsstellung in eine Ein- führhilfeposition, und
- Figur 6d: die Einführhilfeeinrichtung gemäß Figur 6a von vorn, d.h. in einer dem Bediener zugewandten Lage.

Bei der nachfolgenden Beschreibung der Ausführungsbeispiele sind gleiche oder gleichartige Bauteile mit gleichen Bezugszeichen versehen und werden teilweise nicht einzeln erläutert. Gleiche oder gleichwirkende Komponenten sind teilweise auch mit denselben Bezugsziffern versehen, wobei hinzugefügte Kleinbuchstaben a-d den vier Ausführungsbeispielen zugeordnet sind.

Die in den nachfolgenden Figuren dargestellten Anhängekupplungen 10a-10d umfassen einen an einem Kraftfahrzeug 11 befestigbaren Kupplungsarm-Halter 12, der beispielsweise an einem Querträger 13 des Kraftfahrzeuges 11 befestigt ist. Teilweise ist in den Figuren der Querträger 13 nicht dargestellt. Der Kupplungsarm-Halter 12 hat eine Steckaufnahme 14 zum Einstekken eines Kupplungsarms 15, bei den Ausführungsbeispielen von unten. Hier sei betont, dass ein Einstecken von vorn bzw. schräg von unten durchaus auch möglich ist. Der Kupplungsarm 15 ist mittels einer Verriegelungseinrichtung 16 an dem Kupplungsarm-Halter 12 verriegelbar. Beispielsweise enthält die Verriegelungseinrichtung 16 durch einen in der Zeichnung nicht sichtbaren Verriegelungsbolzen nach radial außen vor ein Kupplungsarm-Steckende 17 verdrängbare Kugeln 18, die in korrespondierende Formschlussaufnahmen im Innenraum der Steckaufnahme 14 verriegelnd eingreifen. Wenn der Kupplungsarm 15 in den Halter 12 eingesteckt ist, greifen Formschlussvorsprünge 19, die seitlich vor das Steckende 17 vorstehen, in zugeordnete Formschlussaufnahmen 20 an den Kupplungsarm-Halter 12 ein. Vorliegend sind die Formschlussvorsprünge 19 und die zugeordneten Formschlussaufnahmen 20 dreieckförmig, wobei halbrunde Konturen durchaus auch möglich sind. Am freien Ende des Kupplungsarms 15 befindet sich ein Kopfstück 21, z.B. ein Kugelkopf, zum Befestigen eines in der Zeichnung nicht dargestellten Anhängers.

Der Kupplungsarm-Halter 12 ist hinter einem Stoßfänger 22 des Kraftfahrzeuges 11 angeordnet derart, dass er zumindest von schräg oben, in der Regel auch von direkt hinten nicht oder kaum sichtbar ist. Dadurch ist das Einstecken des Kupplungsarmes 15 in den Halter 12 schwer. Die Position einer Einführöffnung 23 der Steckaufnahme 14 ist von einer Position hinter dem Kraftfahrzeug 11 für einen Bediener nicht oder nur schwer ersichtlich. Hier setzt die Erfindung ein. Einführhilfeeinrichtungen 30a-30d helfen einem Bediener dabei, die jeweilige Einführposition, d.h. die Position der Einführöffnung 23, leicht aufzufinden, so dass das Kupplungsarm-Steckende 17 bequem in die Steckaufnahme 14 einsteckbar ist. Bei den Einführhilfeeinrichtungen 30a-30d steht in ihrer jeweiligen Einführhilfeposition ein Indexteil 31a-31d nach unten vor eine Unterkante des Stoßfängers 22 vor, so dass die Position und Einsteckrichtung für ein Einstecken des Kupplungsarms 15 für einen Bediener visuell deutlich wird.

Das jeweilige Indexteil 31a-31d ist mittels eines Lagers 32a-32d zwischen der vorgenannten Einführhilfeposition und einer Nichtgebrauchsstellung verstellbar, in der das Indexteil 31a-31d nicht oder im Wesentlichen unsichtbar hinter der Unterkante des Stoßfängers 22 oder einem sonstigen heckseitigen Bauteil des Kraftfahrzeuges 11 verborgen ist.

Die Indexteile 31a und 31d weisen eine Zusatzfunktion auf, nämlich die Funktion einer Verschlusseinrichtung zum Verschließen der Einführöffnung 23, so dass diese bei Nichtgebrauch der Anhängekupplung gegenüber Umwelteinflüssen, beispielsweise Schmutz, Feuchtigkeit und dergleichen, geschützt ist.

Die an sich optionale Verschlussfunktion zum Verschließen der Einführöffnung 23 ist aber auch bei den Einführhilfeeinrichtungen 30b, 30c gewährleistet, die von den Indexteilen 31b und 31c separate Verschlusseinrichtungen aufweisen, die jedoch in komfortabler Weise mit den Indexteilen 31b und 31c zusammenwirken.

Die Einführhilfeeinrichtung 30a ist einstückig. Sie enthält einen Halteabschnitt 33, einen das Lager 32a bildenden Lagerabschnitt 34 sowie einen Indexabschnitt 35, der das Indexteil 31a bildet. Die Abschnitte 33-35 sind durch ein einziges Kunststoffteil 36 gebildet, das zumindest im Bereich des Lagerabschnitts 34 eine gewisse Flexibilität aufweist. Aber auch im Bereich des Indexabschnittes 35 ist eine Flexibilität des Kunststoffteiles 36 zweckmäßig, weil der Indexabschnitt 35 zudem die Funktion eines Verschlussabschnittes zum Verschließen der Einführöffnung 23 hat.

Der Halteabschnitt 33 umfasst eine Trägerplatte 37, vor die ein Ringhalter 38a zum Umgreifen eines Außenumfangs des Kupplungsarm-Halters 12 vorsteht. Der Ringhalter 38a umfasst gabelartig mehr als die Hälfte des Außenumfangs des Kupplungsarm-Halters 12. Zweckmäßigerweise sind die beiden Arme des Ringhaltes 38a flexibel, so dass der Ringhalter 38a sozusagen auf den Kupplungsarm-Halter 12 aufklipsbar ist.

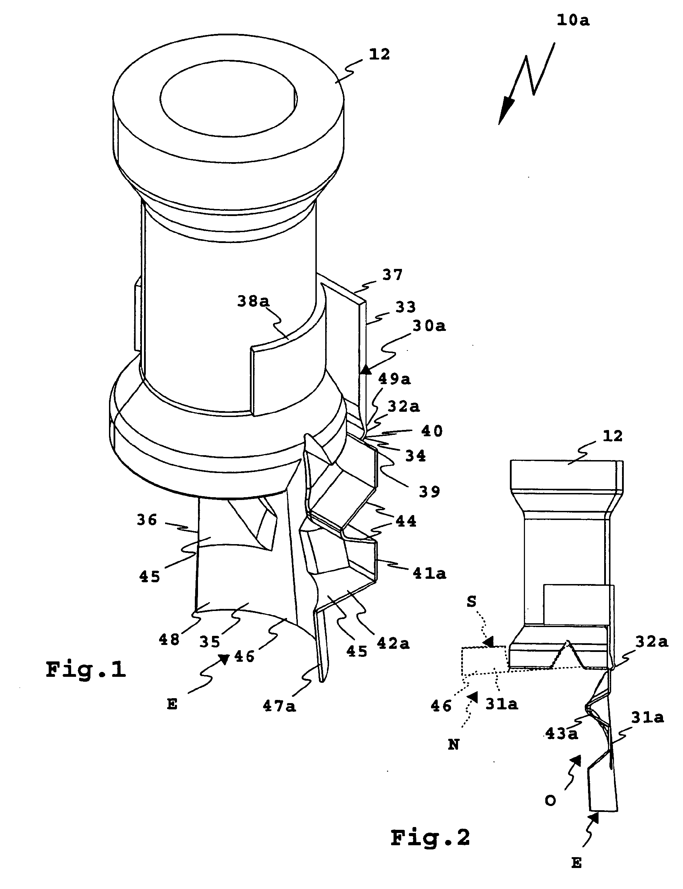

Die Faltstruktur 39 umfasst ein Filmscharnier 40, das das Lager 32a bildet. Mit Hilfe des Lagers 32a ist das Indexteil 31a zwischen der in Figur 1 dargestellten Einführhilfeposition E sowie einer in gestrichelten Linien angedeuteten Nichtgebrauchsstellung N verschließbar. In der Nichtgebrauchsstellung N bildet das Indexteil 31a einen Deckel 41a zum Verschließen der Einführöffnung 23.

Zum Halten des Deckel bzw. Indexabschnitts 35 an oder in der Einführöffnung 23 sind Haltemittel 42a vorgesehen. Die Haltemittel 42 enthalten beispielsweise Formschlusskonturen 43a, die mit den Formschlussaufnahmen 20 korrespondieren. Die Formschlusskonturen 43a, die beispielsweise durch die Faltstruktur 39 gebildet werden, schmiegen sich sozusagen an die Innenflächen der Formschlussaufnahmen 20 an bzw. liegen an den Innenflächen elastisch an, so dass insofern ein erster Halt gegeben ist. Die Formschlusskonturen 43a enthalten zueinander winkelige Schrägflächenabschnitte 44, die relativ zueinander beweglich sind. Zweckmäßigerweise sind die Schrägflächenabschnitte 44 in Bezug zueinander federnd, so dass sie beim Einstecken in die Formschlussaufnahmen 20 auseinander federn und sich an deren Innenflächen anschmiegen.

Die Haltemittel 42a enthalten ferner Klemmflächen 45, die in der in Figur 2 gestrichelt dargestellten Verschlussstellung am unteren Außenumfang 24 des Kupplungsarm-Halters 12 klemmend an. Somit sitzt der Deckel 41a fest in der Einführöffnung 23 und verschließt diese dicht oder zumindest im Wesentlichen dicht. Eine Schließstellung S des Deckels 41a korrespondiert zugleich mit der Nichtgebrauchsstellung N des Indexteils 31a.

Beim Verstellen, insbesondere Schwenken des Indexteils 31a aus der Nichtgebrauchsstellung N in die Einführhilfeposition E nach unten wird zugleich die Einführöffnung 23 geöffnet, d.h. der Deckel 41a in seine Offenstellung verstellt. Auch dieser Vorgang gestaltet sich sehr einfach. Vor den Deckel 41a steht nämlich eine Handgriffpartie 46 zum Ergreifen des Indexteils 31a vor. Die Handgriffpartie 46 bildet zudem einen Handgriff 47a zum Verstellen des Indexteils 31a zwischen den beiden Stellungen E und N.

Das Indexteil 31a hat insbesondere im Bereich der Handgriffpartie 46 eine hohlzylindrische Innenkontur 48, die mit der entsprechenden zylindrischen Außenkontur 25 des Kupplungsarm 15 korrespondiert. Auch diese Maßnahme trägt dazu bei, dass der Kupplungsarm 15 bequem an der Innenkontur 48 entlang in die Steckaufnahme 14 einsteckbar ist.

Das Indexteil 31a ist quer zur Einsteckrichtung des Kupplungsarms 15 in die Steckaufnahme 14 mittels des Lagers 32a schwenkbar, so dass dieses insofern ein Schwenklager 49a bildet.

Bei der Einführhilfeeinrichtung 30b ist hingegen ein Schiebelager 49b verwirklicht. Am oberen, dem Kupplungsarm-Halter 12 zugewandten Endbereich eines Einführhilfeteils 50 der Einführhilfeeinrichtung 30a ist ein rohrschellenartiger Ringhalter 38b angeordnet. Der Ringhalter 38b hält das Einführhilfeteil 50 am Kupplungsarm-Halter 12. Der Ringhalter 38b ist an einem Rohrabschnitt 51, d.h. am Außenumfang des Kupplungsarm-Halters 12, zwischen einem unteren und oberen Endanschlag 52, 53 linear verschieblich, vorliegend parallel zur Einsteckrichtung des Steckendes 17 in die Steckaufnahme 14. Ein Innenumfang des Ringhalters 38a ist dabei derart weit, dass der Ringhalter 38b mit Spiel am Rohrabschnitt 51 verschieblich ist und sich nicht verkantet. Die Endanschläge 52, 53 sind durch Abschnitte des Kupplungsarm-Halters 12 gebildet, die einen größeren Außenumfang aufweisen, als der mittlere Rohrabschnitt 51.

Der Ringhalter 38b ist zweiteilig ausgeführt, wobei ein erstes Ringteil 54 beispielsweise mit einer Rasthalterung, durch Verkleben oder dergleichen an einem zweiten Ringteil 55 befestigt ist, das am oberen Ende des Einführhilfeteils 50 angeordnet ist.

Die Einführhilfeeinrichtung 30b enthält ferner einen Deckel 41b zum Verschließen der Einführöffnung 23. Der Deckel 41b hat zudem die Funktion, das Einführhilfeteil in seiner Nichtgebrauchsstellung N zu Halten. Der Deckel 41b hat als Haltemittel 42b Rastnasen 56, die in eine nicht dargestellte Innenkontur der Steckaufnahme 14 einrasten, wenn der Deckel 41b in die Einführöffnung 23 eingesteckt ist. Die Rastnasen 56 halten den Deckel 41b in der Einführöffnung 23. In dieser Schließstellung S greifen ferner Formschlusskonturen 43b z.B. seitlich vor den Deckel 41b vorstehende Formschlussvorsprünge 57c, in die Formschlussaufnahmen 20 am Kupplungsarm-Halter 12 ein. Der Deckel 41b kann an Handgriffvorsprüngen 58 bequem ergriffen und von der Einführöffnung 23 entfernt werden. Dann gibt der Deckel 41b das Einführhilfeteil 50 sozusagen frei, so dass das Einführhilfeteil 50 von selbst nach unten in Richtung der Einführhilfeposition E entlang dem Rohrabschnitt 51 gleitet, bis es am unteren Endanschlag 52 anschlägt.

In der Einführhilfeposition E steht ein Indexteil 31b des Einführhilfeteils 50 sozusagen in der Art eines Armes nach unten vor die Einführöffnung 23 vor und signalisiert einem Bediener die Position der Einführöffnung 23. Durch die geometrische Ausgestaltung des Indexteils 31b, vorliegend eine Keilform bzw. Trapezform, wird dem Bediener zudem die Einsteckrichtung angezeigt. Das Indexteil 31b verbreitert sich in Richtung der Einführöffnung 23.

Vorzugsweise kann das Indexteil 31b auch farbig ausgestaltet sein, beispielsweise durchgefärbt oder lackiert, wobei eine Signalfarbe, z.B. rot oder gelb, besonders zweckmäßig ist. Die Signalfarbe erleichtert das Auffinden der Steckaufnahme 14, stört jedoch in der Nichtgebrauchsstellung N nicht. In der Nichtgebrauchsstellung N ist das Einführhilfeteil 50 nämlich vom Stoßfänger 22 verdeckt.

Das Indexteil 31b kann zwar plattenartig flach sein. Es hat jedoch vorteilhaft eine zumindest leicht hohlzylindrische Innenkontur 48, die mit der entsprechenden zylindrischen Außenkontur 25 des Kupplungsarm 15 korrespondiert.

Der Deckel 41b hält das Einführhilfeteil 50 in der oberen Position, die die Nichtgebrauchsstellung N bildet. Hierfür ist am Deckel 41b ein Betätigungsabschnitt 59, z.B. Betätigungsvorsprung oder eine Betätigungsnase, vorgesehen, der seitlich vor einen Bodenbereich 60 zum Verschließen der Einführöffnung 23 vorsteht. In der Schließstellung S des Deckels 41b steht der Betätigungsabschnitt 59 seitlich vor den Kupplungsarm-Halter 12 vor. Das Indexteil 31b stützt sich mit seinem unteren, freien Ende auf dem Betätigungsabschnitt 59 ab. Somit kann der Bediener durch eine einfache Betätigungshandlung, nämlich Verschließen der Einführöffnung 23 mit dem in Deckel 41b, zugleich das Einführhilfeteil 50 in die Nichtgebrauchsstellung N verlagern.

Es versteht sich, dass das Indexteil 31b prinzipiell auch als ein Handgriff 47b zum Verstellen des Einführhilfeteils 50 zwischen der Einführhilfeposition E und der Nichtgebrauchsstellung N dienen kann.

Die Einführhilfeeinrichtung 30c umfasst ein Indexteil 31c und einen Steckdosenträger 61c. Der Steckdosenträger 61c und das Indexteil 31c sind an einem gemeinsamen Schwenklager 49c schwenkbeweglich gelagert, das ein Lager 32c für das Indexteil 31c bildet. Das Schwenklager 49c ist zweckmäßigerweise am Kupplungsarm-Halter 12 befestigt, wobei eine Befestigung beispielsweise am Querträger 13 ebenfalls denkbar wäre.

Der Steckdosenträger 61c bildet einen Handgriff 47c zum Betätigen des Indexteils 31c.

Der Steckdosenträger 61c umfasst ein Trägerplatte 62c, an deren freien Endbereich 63 eine Anhängersteckdose 64 zur elektrischen Versorgung des Anhängers angeordnet ist. Der andere, dem Endbereich 63 entgegengesetzte Endbereich der Trägerplatte 62c bildet einen Lager-Endbereich 65, der dem Schwenklager 49c zugeordnet ist. Der Lager-Endbereich 65 wird ebenso wie das Indexteil 31c von einer Lagerwelle 66 durchdrungen. Die Lagerwelle 66 kann beispielsweise durch einen Nietverbindung gebildet sein, wobei zwischen den Teilen 31c und 61c sowie einem am Kupplungsarm-Halter 12 angeordneten Träger 68c für das Schwenklager 49c ein gewisses Schwenkspiel vorhanden sein muss. Allerdings ist dieses Schwenkspiel vorteilhaft so bemessen, dass die Teile 31c, 61c in ihren jeweiligen Endpositionen auch beim Fahrbetrieb des Kraftfahrzeuges 11 verbleiben, ohne das zusätzliche Rast- oder Haltemittel zwingend nötig sind.

So können beispielsweise am Lagerendbereich 65 des Steckdosenträgers 61c und/oder am Lagerbereich 67c des Indexteils 31c Riffelungen, Rastvorsprünge oder dergleichen vorgesehen sein, die mit korrespondierenden Riffelungen oder Rastaufnahmen an einem Träger 68 korrespondieren, der am Kupplungsarm-Halter 12 angeordnet ist und das Schwenklager 49c trägt.

Der Steckdosenträger 61c und das Indexteil 31c sind einstükkig oder fest verbunden oder bewegungsgekoppelt. Beispielsweise sind an den beiden Endbereichen 65c, 67c ineinandergreifende Formschlusskonturen vorgesehen, so dass beim Betätigen des Steckdosenträgers 61c zugleich das Indexteil 31c mit betätigt wird. Insofern bildet der Steckdosenträger 61c vorteilhaft auch ein Handgriffteil zum Betätigen des Indexteils 31c.

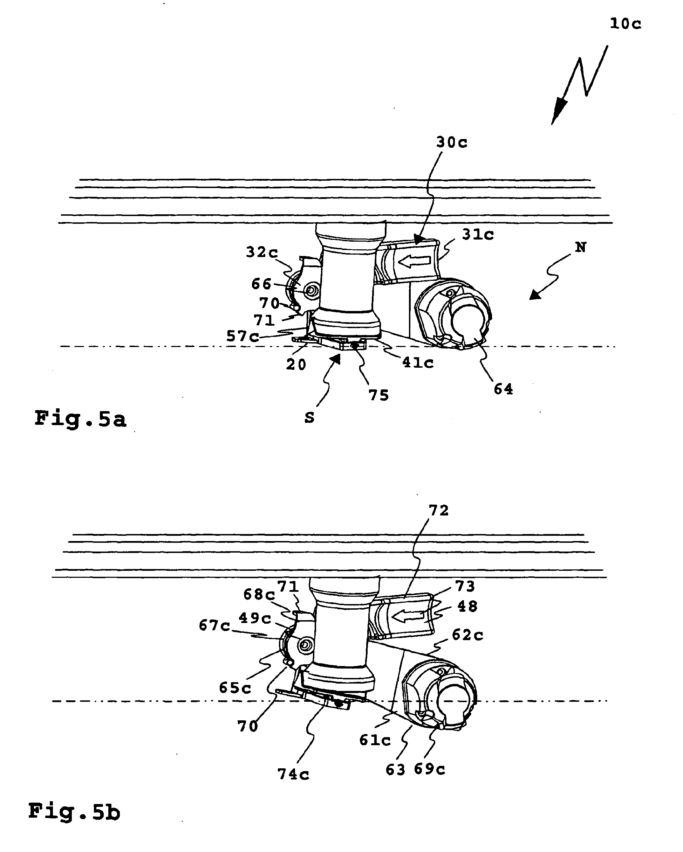

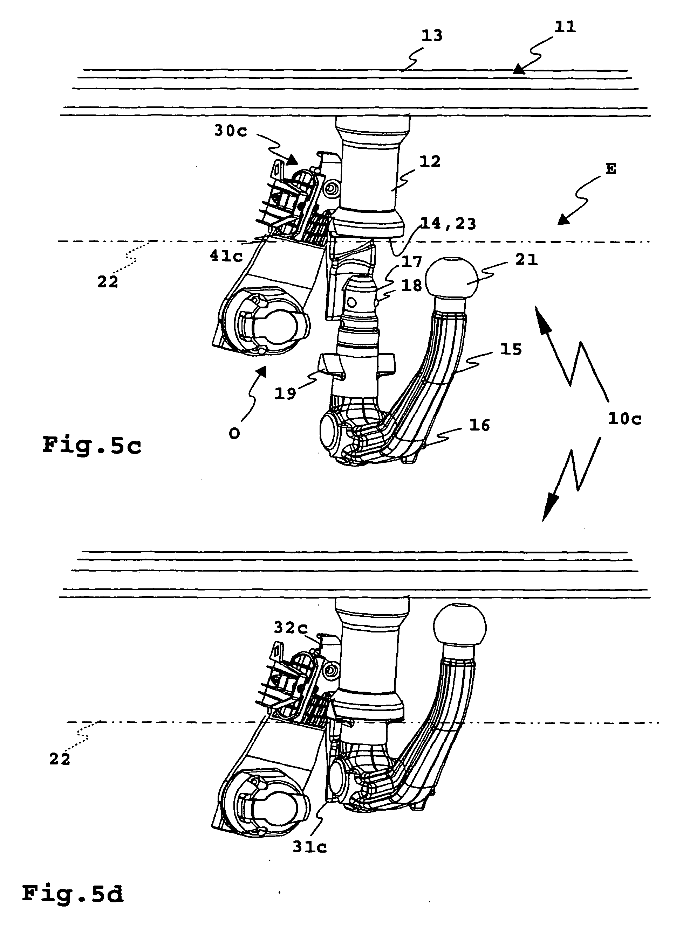

Durch Ergreifen und Schwenken des Steckdosenträgers 61c wird zugleich das Indexteil 31c zwischen seiner Einführhilfeposition E (Figuren 5c, 5d) und der Nichtgebrauchsstellung N (Figur 5a), verschwenkt.

An der Kombination Indexteil 31c, Steckdosenträger 61c ist zweckmäßigerweise ein Anschlagelement 70 angeordnet, das in den beiden vorgenannten Endstellungen E, N an Schwenkanschlägen 71 anschlägt. Das Anschlagelement 70 steht in Richtung der Schwenkanschläge 71 beispielsweise parallel zur Schwenkachse des Schwenklagers 49c vor. Die Schwenkanschläge 71 sind beispielsweise am Träger 68 vorgesehen.

Das Indexteil 31c hat einen in der Einführhilfeposition E nach unten vor die Einführöffnung 23 vorstehenden Armabschnitt 72, an dem ein Symbol 73 angeordnet ist, das eine Einführrichtung beim Einstecken des Kupplungsarm-Steckendes 17 in die Steckaufnahme 14 signalisiert. Der Armabschnitt 72 hat eine mit dem Außenumfang des Kupplungsarms 15 korrespondierende Innenkontur 48, so dass auch insofern eine mechanische Führung des Kupplungsarms 15 beim Einstecken gegeben ist.

An dem Steckdosenträger 61c ist ein Deckel 41c zum Verschließen der Einführöffnung 23 angeordnet. Der Deckel 41c ist an einem Deckelhalter 74c angeordnet, der winkelig, vorliegend rechtwinkelig, vor die Trägerplatte 62c vorsteht. Der Deckel 41c ist beweglich an dem Deckelhalter 74c befestigt, vorliegend mit einer Pendellagerung 75, so dass er mit Pendelspiel in die Einführöffnung 23 einführbar ist. Dann greift ein keilartiger Formschlussvorsprung 57c des Deckels 41c in die Formschlussaufnahmen 20 am Halter 12 ein. Die Pendellagerung 75 hat eine Pendel- oder Schwenkachse, die parallel zur Schwenkachse des Schwenklagers 49c verläuft.

Wenn der Steckdosenträger 61c nunmehr aus seiner Nichtgebrauchsstellung N, in der er nicht oder nur unwesentlich nach unten vor den Stoßfänger 22 vorsteht, in Richtung seiner Gebrauchsstellung, in der vor den Stoßfänger 22 vorsteht, verschwenkt wird (Figur 5c), wird zugleich der Deckel 41c von der Einführöffnung 23 entfernt, so dass er seine Offenstellung O einnimmt. In umgekehrter Richtung bewirkt ein Verschwenken des Steckdosenhalters 61c, der ein Handgriffteil 69c bildet, in Richtung der Nichtgebrauchsstellung N, dass zugleich die Einführöffnung 23 mit dem Deckel 41c verschlossen wird (Figur 5a). Dadurch ist die Bedienung der Anhängekupplung 10c einfach.

Die Einführhilfeeinrichtung 30d der Anhängekupplung 10d umfasst zwar funktional dieselben Komponenten wie die Einführhilfeeinrichtung 30d, wobei die Zuordnung der einzelnen Funktionselemente anders gewählt ist:
Ein Steckdosenträger 61d ist an einem Schwenklager 76 bezüglich eines Trägers 68d schwenkbar gelagert. Der Träger 68d ist am Kupplungsarm-Halter 12 befestigt, beispielsweise zwischen dem Halter 12 und einer nicht dargestellten Karosserie des Kraftfahrzeuges 11. Das Indexteil 31d hingegen ist separat vom Steckdosenträger 61d an einem ein Lager 32d beweglich gelagert, z.B. einem Schwenklager 49d schwenkbar gelagert.
   Allerdings bildet bei der Einführhilfeeinrichtung 30d nicht der Steckdosenträger 61d eine Betätigungshandhabe oder ein Handgriffteil 69d, sondern das Indexteil 31d. Die beiden Teile 31d und 61d sind bewegungsgekoppelt, wobei diese Bewegungskopplung so ausgeführt ist, dass zwar beim Betätigen des Indexteils 31d der Steckdosenträger 61d mitgenommen wird und zwischen seiner Gebrauchs- und seiner Nichtgebrauchsstellung verstellbar ist, jedoch nicht umgekehrt. Mithin blockiert also das Indexteil 31d eine Bewegung des Steckdosenträgers 61d.
   Zur Bewegungskopplung zwischen den Teilen 31d, 61d ist eine Kulissenführung 78 vorgesehen. Die Kulissenführung 78 enthält eine Führungskulisse 79 am Lagerbereich 65d einer Trägerplatte 62d des Steckdosenträgers 61d. An einem freien Endbereich 63 der Trägerplatte 62d ist eine nicht dargestellte Anhängersteckdose 64 anbringbar, wobei die zugeordneten Bohrungen zur Durchführung von Kabeln bzw. zum Einbringen von Schrauben in der Zeichnung sichtbar sind. An einem Lagerbereich 67d des Indexteils 31d ist ein Kulissenstift 80 angeordnet, der in die Führungskulisse 79 eingreift. Der Kulissenstift 80 ist entlang einer Kulissenbahn 81 zwischen durch Kulissenenden 82a, 82b definierten Endanschlägen beweglich, die der Einführhilfeposition E und der Nichtgebrauchsstellung N zugeordnet sind.

Das einen Kulissenendanschlag bildende Kulissenende 82b ist in einer Art Kulissentasche 83 vorgesehen. Zwar wäre es möglich, den Steckdosenträger 61d etwas in der Zeichnung nach oben zu schwenken, wobei der Kulissenstift 80 aus der Kulissentasche 83 herausbewegt wird. Dann schlägt der Kulissenstift 80 jedoch an einem dem Kulissenende 82b zugeordneten Schwenkanschlag 84 der Führungskulisse 79 an, so dass ein Weiterschwenken des Steckdosenträgers 61d verhindert ist. Nach unten kann der Steckdosenträger 61d auch nicht verschwenkt werden, weil der Kulissenstift 80 am Kulissenende 82b in der Kulissentasche 83 anschlägt.

Der Anschlag 84 liegt dem Kulissenende 82b etwa gegenüber. Der Anschlag 84 und das Anschlag-Kulissenende 82b haben etwa denselben Radialabstand zum Schwenklager 76.

Im Bereich des Anschlags 84 hat die Führungskulisse 79 eine starke Krümmung, die vorliegend haarnadelartig ausgestaltet ist. Die Krümmung ist dergestalt, dass die vorgenannte Blokkierung bewirkt wird. Umgekehrt ist es allerdings möglich, durch Schwenken des Indexteils 31d den Steckdosenträger 61d mitzunehmen. Wird nämlich das Indexteil 31d in der Zeichnung nach unten geschwenkt, was durch einen Symbolpfeil 85 an einer Handgriffpartie 77 des Indexteils 31d angedeutet ist, gelangt der Kulissenstift 80 aus der Kulissentasche 83 und kann entlang der Kulissenbahn 81 in Richtung des Kulissenendes 82a sozusagen weiter wandern. Dadurch wird die Schwenkbewegung des Steckdosenträgers 61d bewirkt.

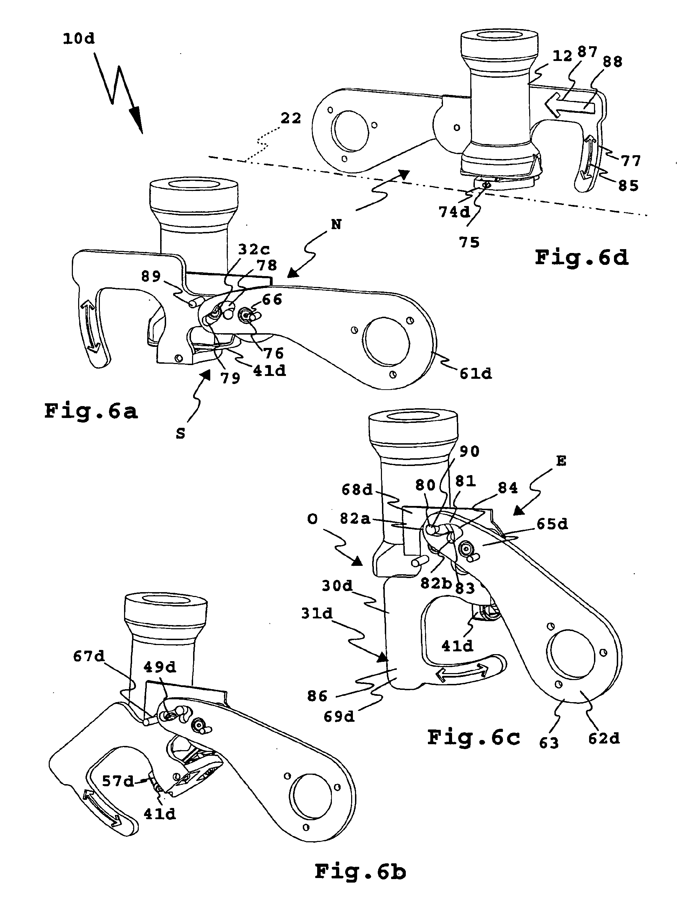

Der Steckdosenträger 61d ist auch in seiner in Figur 6c dargestellten unteren Stellung, seiner Gebrauchsstellung, gegen ein Schwenken blockiert. Der Kulissenstift 80 schlägt nämlich im Bereich des Kulissenendes 82a quer zur Schwenkrichtung des Schwenklagers 76 an einer einen Schwenkanschlag 90 bildenden Oberseite der Führungskulisse 79 an, so dass der Steckdosenträger 61d gegen ein Verschwenken blockiert ist.

Anders als bei der Einführhilfeeinrichtung 30d ist ein Deckel 41d nicht am Steckdosenträger, sondern am Indexteil 31d befestigt. Dieses weist einen Deckelhalter 74d auf, der winkelig, vorliegend rechtwinkelig vor eine Indexteilplatte 86 vorsteht. Der Deckel 41d, der vorteilhaft einen mit den Formschlussaufnahmen 20 korrespondierenden Formschlussvorsprung 57d aufweist, ist mit Hilfe einer Pendellagerung 75 pendelnd an dem Deckelhalter 74d befestigt. Die zugeordnete Pendelachse verläuft parallel zur Schwenkachse des Schwenklagers 49d. Somit ist es möglich, durch Verschwenken des Indexteils 31d von seiner in Figur 6a dargestellten Nichtgebrauchsstellung N, bei der der Deckel 41d die Einführöffnung 23 verschließt, in die Einführhilfeposition E (Figur 6c), den Deckel 41d in seine Offenstellung O zu verstellen, bei der er die Einführöffnung 23 zum Einstecken des Kupplungsarmes 15 freigibt. Die Indexteil-Platte 86 enthält einen Indexabschnitt 87, der in der Einführhilfeposition E mit der Einführrichtung der Steckaufnahme 14 fluchtet. Dadurch signalisiert der Indexabschnitt 87, zweckmäßigerweise unterstützt durch ein PfeilSymbol 88, die Einführrichtung des Kupplungsarm 15 in die Steckaufnahme 14. In der Einführhilfeposition E steht der Indexabschnitt 87 nach unten vor den Stoßfänger 22 vor.

Die Handgriffpartie 77 steht von dem Indexabschnitt 87 winkelig ab. In der Nichtgebrauchsstellung N steht die Handgriffpartie 77 zweckmäßigerweise nach unten, so dass sie von einem Bediener ergriffen werden kann. Vorzugsweise hat die Handgriffpartie 77 einen bogenförmigen Verlauf, was die Schwenkbewegung um das Schwenklager 49d signalisiert.

Von der Indexteil-Platte 86 steht vorteilhaft ein Schwenkanschlag 89 ab, der in der Nichtgebrauchsstellung N gegen einen Gegenanschlag anschlägt, beispielsweise eine Außenkante des Steckdosenträgers 61d.

## Patentansprüche

1. Anhängekupplung für Kraftfahrzeuge (11), insbesondere Personenkraftwagen, mit einem Kupplungsarm (15), der an seinem freien Ende ein Kopfstück (21) zum lösbaren Befestigen eines Anhängers trägt und mit einem Kupplungsarm-Steckende (17) an eine Steckaufnahme (14) eines an dem Kraftfahrzeug (11) anordenbaren Kupplungsarm-Halters (12) ansteckbar ist, **dadurch gekennzeichnet, dass** sie eine Einführhilfeeinrichtung (30a-30d) zur Unterstützung eines Einführens des Kupplungsarm-Steckendes (17) in oder auf die Steckaufnahme (14) des Kupplungsarm-Halters (12) aufweist, dass die Einführhilfeeinrichtung (30a-30d) ein Indexteil (31a-31d) umfasst, das in einer Einführhilfeposition (E) vor die Steckaufnahme (14) zur Anzeige der Position der Steckaufnahme (14) vorsteht, und dass die Einführhilfeeinrichtung (30a-30d) ein Lager (32a-32d) zum Verstellen des Indexteils (31a-31d) zwischen der Einführhilfeposition (E) und einer Nichtgebrauchsstellung (N) aufweist.

2. Anhängekupplung nach Anspruch 1, **dadurch gekennzeichnet, dass** das Lager (32a-32d) ein Schiebelager (49b) und/oder ein Schwenklager (49a; 49c; 49d) umfasst und/oder dass das Lager (32a-32d) an dem Kupplungsarm-Halter (12) angeordnet ist und/oder dass das Lager (32a-32d) und das Indexteil (31a-31d) einstückig sind.

3. Anhängekupplung nach Anspruch 1 oder 2, **dadurch gekennzeichnet, dass** die Einführhilfeeinrichtung (30a-30d) einen ringförmigen oder teilringförmigen Ringhalter (38a, 38b) zum Umgreifen des Kupplungsarm-Halters (12) und Halten an dem Kupplungsarm-Halter (12) aufweist.

4. Anhängekupplung nach Anspruch 3, **dadurch gekennzeichnet, dass** der Ringhalter (38a, 38b) einen Bestandteil des Lagers (32a-32d) bildet und an dem Kupplungsarm-Halter (12) schiebebeweglich und/oder schwenkbeweglich ist.

5. Anhängekupplung nach einem der vorhergehenden Ansprüche, **dadurch gekennzeichnet, dass** die Einführhilfeeinrichtung (30a-30d), insbesondere das Lager (32a-32d), eine Faltstruktur (39), insbesondere ein Filmscharnier (40), aufweist.

6. Anhängekupplung nach einem der vorhergehenden Ansprüche, **dadurch gekennzeichnet, dass** sie einen Deckel (41a-41d) zum Verschließen der Steckaufnahme (14) umfasst.

7. Anhängekupplung nach Anspruch 6, **dadurch gekennzeichnet, dass** der Deckel (41a-41d) und/oder das Indexteil (31a-31d) Haltemittel (42a, 42b) zum Halten des Deckels (41a-41d) in der Steckaufnahme (14) aufweisen.

8. Anhängekupplung nach Anspruch 6 oder 7, **dadurch gekennzeichnet, dass** der Deckel (41a-41d) einen Betätigungsabschnitt (59) zum Betätigen des Indexteils (31a-31d) in Richtung der Nichtgebrauchsstellung (N) aufweist.

9. Anhängekupplung nach einem der Ansprüche 6 bis 8, **dadurch gekennzeichnet, dass** der Deckel (41a-41d) einen Bestandteil der Einführhilfeeinrichtung (30a-30d) bildet und/oder dass der Deckel (41a-41d) an dem Indexteil (31a-31d) angeordnet ist oder durch das Indexteil (31a-31d) gebildet ist.

10. Anhängekupplung nach einem der vorhergehenden Ansprüche, **dadurch gekennzeichnet, dass** die Einführhilfeeinrichtung (30a-30d) mindestens einen Handgriff (47a-47d) zum Verstellen des Indexteils (31a-31d) zwischen der Einführhilfeposition (E) und der Nichtgebrauchsstellung (N) aufweist, wobei der mindestens eine Handgriff (47a-47d) vorteilhaft an dem Indexteil (31a-31d) angeordnet ist oder vorteilhaft durch das Indexteil (31a-31d) gebildet ist.

11. Anhängekupplung nach Anspruch 10, **dadurch gekennzeichnet, dass** der mindestens ein Handgriff (47a-47d) an einem mit dem Indexteil (31a-31d) bewegungsgekoppelten Handgriffteil (69c; 69d) angeordnet ist und/oder dass der Deckel (41a-41d) an dem Handgriffteil (69c; 69d) angeordnet ist.

12. Anhängekupplung nach einem der vorhergehenden Ansprüche, **dadurch gekennzeichnet, dass** sie einen Steckdosenträger (61c; 61d) für eine Anhängersteckdose (64) zur elektrischen Stromversorgung des Anhängers aufweist, wobei der Steckdosenträger (61c; 61d) zweckmäßigerweise das Handgriffteil (69c; 69d) bildet.

13. Anhängekupplung nach Anspruch 12, **dadurch gekennzeichnet, dass** das Indexteil (31a-31d) mit dem Steckdosenträger (61c; 61d), insbesondere mittels einer Kulissenführung (78) und/oder durch Betätigungsmitnahmen, bewegungsgekoppelt ist.

14. Anhängekupplung nach Anspruch 13, **dadurch gekennzeichnet, dass** das Indexteil (31a-31d) und der Steckdosenträger (61c; 61d) derart bewegungsgekoppelt sind, dass der Steckdosenträger (61c; 61d) mittels des Indexteils (31a-31d) betätigbar ist, das Indexteil (31a-31d) jedoch den Steckdosenträger (61c; 61d) gegen eine Betätigung blockiert.

15. Anhängekupplung nach einem der vorhergehenden Ansprüche, **dadurch gekennzeichnet, dass** das Indexteil (31a-31d) zumindest teilweise eine hohlzylindrische, mit dem Kupplungsarm (12) im Bereich von dessen Kupplungsarm-Steckende (17) korrespondierende Innenkontur (48) aufweist.

## Claims

1. Trailer coupling for motor vehicles (11), in particular motor cars, with a coupling arm (15) which carries at its free end a head section (21) for the releasable attachment of a trailer and may be plugged in by a coupling arm insertion end (17) to a plug receiver (14) of a coupling arm holder (12) which may be fitted to the motor vehicle, **characterised in that** it has an insertion guide device (30a-30d) to assist in insertion of the coupling arm insertion end (17) into or on to the plug receiver (14) of the coupling arm holder (12), that the insertion guide device (30a-30d) comprises an indexing section (31a-31d) which, in an insertion guidance position, protrudes beyond the plug receiver (14) to indicate the position of the plug receiver (14), and that the insertion guide device (30a-30d) has a bearing (32a-32d) to shift the indexing section (31a-31d) between the insertion guidance position (E) and an inoperative position (N).

2. Trailer coupling according to claim 1, **characterised in that** the bearing (32a-32d) comprises a sliding bearing (49b) and/or a swivel bearing (49a; 49c; 49d) and/or that the bearing (32a-32d) is mounted on the coupling arm holder (12) and/or that the bearing (32a-32d) and the indexing section (31a-31d) are integrated.

3. Trailer coupling according to claim 1 or 2, **characterised in that** the insertion guide device (30a-30d) has an annular or part-annular ring holder (38a, 38b) to encompass the coupling arm holder (12) and for holding to the coupling arm holder (12).

4. Trailer coupling according to claim 3, **characterised in that** the ring holder (38a, 38b) forms a constituent part of the bearing (32a-32d) and is able to slide and/or swivel on the coupling arm holder (12).

5. Trailer coupling according to any of the preceding claims, **characterised in that** the insertion guide device (30a-30d), in particular the bearing (32a-32d), has a folding structure (39), in particular a film hinge (40).

6. Trailer coupling according to any of the preceding claims, **characterised in that** it has a cover (41 a-41 d) for sealing the plug receiver (14).

7. Trailer coupling according to claim 6, **characterised in that** the cover (41a-41d) and/or the indexing section (31a-31d) have/has holding means (42a, 42b) for holding the cover (41 a-41d) in the plug receiver (14).

8. Trailer coupling according to claim 6 or 7, **characterised in that** the cover (41a-41d) has an actuating section (59) for actuating the indexing section (31a-31d) towards the inoperative position (N).

9. Trailer coupling according to any of claims 6 to 8, **characterised in that** the cover (41 a-41d) forms a constituent part of the insertion guide device (30a-30d) and/or that the cover (41a-41d) is fitted to the indexing section (31a-31d) or is formed by the indexing section (31a-31d).

10. Trailer coupling according to any of the preceding claims, **characterised in that** the insertion guide device (30a-30d) has at least one handle (47a-47d) for shifting the indexing section (31a-31d) between the insertion guidance position (E) and the inoperative position (N), wherein the handle or handles (47a-47d) is or are fitted advantageously to the indexing section (31a-31d) or is or are advantageously formed by the indexing section (31a-31d).

11. Trailer coupling according to claim 10, **characterised in that** the handle or handles (47a-47d) is or are mounted on a handle component (69c; 69d) movement-coupled to the indexing section (31a-31d), and/or that the cover (41 a-41 d) is fitted to the handle component (69c; 69d).

12. Trailer coupling according to any of the preceding claims, **characterised in that** it has a socket support (61c; 61d) for a trailer socket (64) for the electrical power supply to the trailer, wherein the socket support (61c; 6 1 d) expediently forms the handle component (69c; 69d).

13. Trailer coupling according to claim 12, **characterised in that** the indexing section (31 a-31 d) is movement-coupled to the socket support (61 c; 61 d), in particular by means of a gate guide (78) and/or by actuating drivers.

14. Trailer coupling according to claim 13, **characterised in that** the indexing section (3 1 a-31d) and the socket support (61c; 6 1 d) are movement-coupled in such a way that the socket support (61c; 61d) may be actuated by means of the indexing section (31a-31d), but the indexing section (31a-31d) blocks the socket support (61 c; 6 1 d) from actuation.

15. Trailer coupling according to any of the preceding claims, **characterised in that** the indexing section (31a-31d) has at least partly a hollow cylindrical internal contour (48) which corresponds with the coupling arm holder (12) in the area of its coupling arm insertion end (17).

## Revendications

1. Dispositif d'attelage pour des véhicules automobiles (11), en particulier des véhicules de tourisme, comportant un bras d'attelage (15), qui porte sur son extrémité libre une tête d'attelage (21) pour la fixation amovible d'une remorque et qui peut être accouplé avec une extrémité d'accouplement (17) du bras d'attelage dans un logement d'accouplement (14) d'un support de bras d'attelage (12) à agencer sur le véhicule automobile (11), **caractérisé en ce que** ledit dispositif d'attelage comporte un dispositif d'aide à l'introduction (30a-30d) pour faciliter une introduction de l'extrémité d'accouplement (17) du bras d'attelage dans ou sur le logement d'accouplement (14) du support de bras d'attelage (12), **en ce que** le dispositif d'aide à l'introduction (30a-30d) comporte un élément de repérage (31a-31d) qui, dans une position d'aide à l'introduction (E) s'avance devant le logement d'accouplement (14) pour signaler la position du logement d'accouplement (14), et **en ce que** le dispositif d'aide à l'introduction (30a-30d) comporte un palier (32a-32d) pour déplacer l'élément de repérage (31a-31d) entre la position d'aide à l'introduction (E) et une position de non-utilisation (N).

2. Dispositif d'attelage selon la revendication 1, **caractérisé en ce que** le palier (32a-32d) comporte un palier coulissant (49b) et/ou un palier pivotant (49a ; 49c ; 49c) et/ou **en ce que** le palier (32a-32d) est disposé sur le support de bras d'attelage (12) et/ou **en ce que** le palier (32a-32d) et l'élément de repérage (31a-31d) sont réalisés d'un seul tenant.

3. Dispositif d'attelage selon la revendication 1 ou 2, **caractérisé en ce que** le dispositif d'aide à l'introduction (30a-30d) comporte un support annulaire (38a, 38b) en forme d'anneau ou d'anneau partiel pour enserrer le support de bras d'attelage (12) et être maintenu sur le support de bras d'attelage (12).

4. Dispositif d'attelage selon la revendication 3, **caractérisé en ce que** le support annulaire (38a, 38b) forme une partie intégrante du palier (32a-32d) et est mobile en coulissement et/ou en pivotement sur le support de bras d'attelage (12).

5. Dispositif d'attelage selon l'une quelconque des revendications précédentes, **caractérisé en ce que** le dispositif d'aide à l'introduction (30a-30d), en particulier le palier (32a-32d), comporte une structure pliable (39), en particulier une charnière flexible (40).

6. Dispositif d'attelage selon l'une quelconque des revendications précédentes, **caractérisé en ce qu'**il comporte un couvercle (41a-41d) pour obturer le logement d'accouplement (14).

7. Dispositif d'attelage selon la revendication 6, **caractérisé en ce que** le couvercle (41a-41d) et/ou l'élément de repérage (31a-31d) comportent des moyens de retenue (42a, 42b) pour maintenir le couvercle (41a-41d) dans le logement d'accouplement (14).

8. Dispositif d'attelage selon la revendication 6 ou 7, **caractérisé en ce que** le couvercle (41a-41d) comporte une partie d'actionnement (59) pour manoeuvrer l'élément de repérage (31a-31d) vers la position de non-utilisation (N).

9. Dispositif d'attelage selon l'une quelconque des revendications 6 à 8, **caractérisé en ce que** le couvercle (41a-41d) forme une partie intégrante du dispositif d'aide à l'introduction (30a-30d) et/ou **en ce que** le couvercle (41 a-41d) est disposé sur l'élément de repérage (31a-31d) ou est formé par l'élément de repérage (31 a-31 d).

10. Dispositif d'attelage selon l'une quelconque des revendications précédentes, **caractérisé en ce que** le dispositif d'aide à l'introduction (30a-30d) comporte au moins une manette (47a-47d) pour déplacer l'élément de repérage (31a-31d) entre la position d'aide à l'introduction (E) et la position de non-utilisation (N), ladite au moins une manette (47a-47d) étant disposée avantageusement sur l'élément de repérage (31a-31d) ou étant formée avantageusement par l'élément de repérage (31 a-31 d).

11. Dispositif d'attelage selon la revendication 10, **caractérisé en ce que** ladite au moins une manette (47a-47d) est disposée sur un élément de manette (69c ; 69d), couplé en mouvement avec l'élément de repérage (31 a-31d), et/ou **en ce que** le couvercle (41a-41d) est disposé sur l'élément de manette (69c ; 69d).

12. Dispositif d'attelage selon l'une quelconque des revendications précédentes, **caractérisé en ce qu'**il comporte un support de prise de courant (61c ; 61d) pour une prise de courant (64) destinée à l'alimentation électrique de la remorque, ledit support de prise de courant (61c ; 61d) formant avantageusement l'élément de manette (69c ; 69d).

13. Dispositif d'attelage selon la revendication 12, **caractérisé en ce que** l'élément de repérage (31a-31d) est couplé en mouvement avec le support de prise de courant (61c; 61d), en particulier au moyen d'une coulisse de guidage (78) et/ou par des entraîneurs.

14. Dispositif d'attelage selon la revendication 13, **caractérisé en ce que** l'élément de repérage (31a-31d) et le support de prise de courant (61c ; 61d) sont couplés en mouvement de telle sorte que le support de prise de courant (61c ; 61d) peut être actionné au moyen de l'élément de repérage (31a-31d), néanmoins l'élément de repérage (31a-31d) bloque le support de prise de courant (61c ; 61d) contre tout actionnement.

15. Dispositif d'attelage selon l'une quelconque des revendications précédentes, **caractérisé en ce que** l'élément de repérage (31a-31d) comporte au moins en partie un contour intérieur (48) cylindrique creux, correspondant au bras d'attelage (12) dans la zone de l'extrémité d'accouplement (17) de ce dernier.
